(19) Europäisches Patentamt

European Patent Office

Office européen des brevets

(11) **EP 1 990 618 B1**

(12) **FASCICULE DE BREVET EUROPEEN**

(45) Date de publication et mention
de la délivrance du brevet:
**01.07.2020 Bulletin 2020/27**

(51) Int Cl.:
***G01J 9/00*** *(2006.01)*

(21) Numéro de dépôt: **08156008.8**

(22) Date de dépôt: **09.05.2008**

(54) **Procédé et dispositif de mesure d'au moins une déformation d'une surface d'onde**

Verfahren und Vorrichtung zum Messen mindestens einer Deformation einer Wellenoberfläche

Method and device for measuring at least one deformation of a wave front

(84) Etats contractants désignés:
**DE FR GB IT NL**

(30) Priorité: **11.05.2007 FR 0755041**

(43) Date de publication de la demande:
**12.11.2008 Bulletin 2008/46**

(73) Titulaire: **L'OFFICE NATIONAL D'ETUDES ET DE RECHERCHES AEROSPATIALES**
**91120 Palaiseau (FR)**

(72) Inventeurs:
• **Cassaing, Frédéric**
**91120 Palaiseau (FR)**
• **Mugnier, Laurent**
**91120 Palaiseau (FR)**

(74) Mandataire: **Regimbeau**
**20, rue de Chazelles**
**75847 Paris Cedex 17 (FR)**

(56) Documents cités:
**FR-A1- 2 889 774**

• **BAIK ET AL: "A center detection algorithm for Shack-Hartmann wavefront sensor" OPTICS AND LASER TECHNOLOGY, ELSEVIER SCIENCE PUBLISHERS BV., AMSTERDAM, NL, vol. 39, no. 2, mars 2007 (2007-03), pages 262-267, XP005638408 ISSN: 0030-3992**
• **FONTANELLA J C ET AL: "Wavefront sensing deconvolution and adaptive optics" JOURNAL OF OPTICS, MASSON EDITEUR. PARIS, FR, vol. 16, no. 6, 1 novembre 1985 (1985-11-01), pages 257-268, XP020026766 ISSN: 0150-536X**
• **BLANCHARD P M ET AL: "PHASE-DIVERSITY WAVE-FRONT SENSING WITH A DISTORTED DIFFRACTION GRATING" APPLIED OPTICS, OSA, OPTICAL SOCIETY OF AMERICA, WASHINGTON, DC, US, vol. 39, no. 35, 10 décembre 2000 (2000-12-10), pages 6649-6655, XP001017744 ISSN: 0003-6935**

## Description

## DOMAINE TECHNIQUE GENERAL

L'invention concerne un procédé et un dispositif pour l'analyse d'une surface d'onde.

L'invention trouve, en particulier, application dans le domaine de l'imagerie à haute résolution, de la métrologie et de la mise en forme de faisceaux.

Elle concerne notamment la mesure des déformations. Les déformations d'une surface d'onde peuvent être introduites par un système optique et/ou par le milieu de propagation de la lumière ou par une pièce à caractériser.

## ETAT DE LA TECHNIQUE

Les documents FR2889774 A1, Blanchard et al: Applied Optics, Vol 39, No35, pp 6649-6655, Baik et al: Optics and Laser Technology 39 (2007) 262-267 et Fontanella: J. Optics (Paris), 1985, Vol 16, No6, pp 257-268 divulguent des dispositifs pour l'analyse d'une surface d'onde.

Dans le domaine optique, c'est-à-dire entre l'infra-rouge lointain (longueurs d'onde de l'ordre de 0,1mm) et les rayons X (longueur d'onde de l'ordre de 1pm), les détecteurs ne sont pas sensibles à la phase de l'onde électromagnétique reçue, mais uniquement à l'énergie reçue.

La phase jouant un rôle majeur dans de nombreuses applications, il a été développé des dispositifs appelés « Analyseurs de Surface d'Onde » (ASO, en anglais « *wave-front sensor* »), permettant de mesurer des variations de phase en les transformant en variations d'intensité mesurables.

Les analyseurs de surface d'onde sont actuellement utilisés pour de nombreuses applications :

- pour déterminer la forme d'un objet, en mesurant la déformation d'une onde réfléchie par l'objet ;
- pour déterminer les caractéristiques d'un milieu de propagation, en mesurant la déformation d'une onde transmise dans le milieu ;
- pour aligner les composants d'un système optique lors de son intégration ;
- pour mesurer les déformations d'un système optique lors de son utilisation, afin de corriger numériquement a posteriori les images enregistrées ;
- pour corriger en temps-réel les déformations introduites par un système optique ou par le milieu de propagation (dans le domaine de l'optique adaptative), il peut s'agir d'un instrument d'observation (télescope, lunette,...) ou d'un laser de puissance.

Dans ce dernier cas, l'ASO est utilisé en boucle fermée, en conjonction avec un élément permettant de contrôler la phase de l'onde (miroir déformable, position d'un ou plusieurs éléments optiques sur le trajet de l'onde, lignes à retard ou déphaseurs etc.).

La plupart des ASO aujourd'hui utilisés font appel à un dispositif dédié, nécessitant le plus souvent un plan conjugué de la pupille.

Un instrument d'imagerie optique est naturellement équipé d'une camera d'imagerie en plan focal.

Il apparaît donc avantageux d'utiliser un ASO au voisinage de cette camera pour mesurer les déformations introduites par l'instrument, évitant ainsi toutes les déformations différentielles introduites par un dispositif du type ASO en plan pupille et l'éventuel séparateur de faisceau qui l'alimente.

Ainsi des techniques dites « plan focal » ont été proposées. De telles caractéristiques permettent de n'utiliser que quelques capteurs au voisinage du capteur où, par exemple, est enregistrée la scène observée.

La première méthode pour l'analyse du front d'onde au plan focal aussi appelée en anglais « *phase retrieval* » ne nécessite qu'une image focale d'une source ponctuelle si l'on connaît la forme exacte de la pupille d'entrée de l'instrument d'observation optique.

Cette méthode consiste à trouver les déformations (ou « la phase ») les plus compatibles avec les contraintes connues dans le plan pupille et dans le plan focal.

Une limitation importante de cette technique est qu'il y a généralement une indétermination / ambiguïté de signe sur les déformations estimées.

Il a été montré qu'en utilisant une deuxième image avec une déformation supplémentaire connue il est possible de mesurer la phase même si l'objet est inconnu, cela sans l'ambiguïté de signe mentionnée ci-dessus.

Cette technique plus récente d'ASO est appelée diversité de phase (en anglais, « *phase diversity* »). La deuxième image est dite image de diversité.

La déformation supplémentaire introduite dans l'image de diversité est une manière de coder les déformations à mesurer différemment de celle de la première image.

Ces techniques sont connues sous l'appellation de codage de surface d'onde (en anglais, « *wavefront coding* »).

La diversité de phase permet de mesurer les déformations de la surface d'onde de manière non ambiguë mais nécessite, cependant, l'utilisation d'au moins deux images.

Ceci oblige soit à introduire un dispositif optique permettant d'acquérir ces deux images simultanément sur un voire plusieurs détecteur(s), soit à mesurer les deux images successivement avec le même dispositif en introduisant la déformation supplémentaire entre les deux mesures.

Cette technique est toutefois limitée. En effet, soit les deux images ne sont pas simultanées ce qui peut être préjudiciable pour certaines applications du fait de l'évolution temporelle des phénomènes. Soit, il faut une optique auxiliaire supplémentaire pour imager simultanément l'image focale et l'image avec la déformation supplémentaire, ce qui tend à complexifier le dispositif.

## PRESENTATION DE L'INVENTION

La présente invention se propose de remédier aux problèmes susmentionnés.

A cet effet selon un premier aspect, l'invention concerne un procédé de mesure d'au moins une déformation d'au moins une surface d'onde, chaque surface d'onde étant associée à un point source issu d'un plan focal d'un système optique, selon la revendication 1.

D'autres aspects du procédé sont les suivants.

La mesure des déformations met en oeuvre un modèle d'images générées par un calculateur, et en ce qu'on recherche au moins une déformation qui produit avec ce modèle une image proche de l'image acquise.

Pour apprécier la proximité avec l'image acquise, on calcule une distance entre une image générée et l'image acquise.

Le calcul de la distance met en œuvre un calcul de distance euclidienne.

Le modèle d'images est au moins fonction des caractéristiques du système optique, du milieu de propagation de la lumière et de la déformation supplémentaire pré-déterminée.

Les caractéristiques du système optique sont la forme de la pupille dudit système et la bande spectrale.

La déformation supplémentaire comprend une composante centro-symétrique.

La déformation supplémentaire est choisie dans le groupe suivant : une défocalisation, un astigmatisme, une aberration sphérique.

On introduit la ou les déformations de la surface d'onde par le milieu de propagation de la lumière, par le système optique, ou par une pièce à caractériser.

Selon un deuxième aspect, l'invention concerne un dispositif de mesure d'au moins une déformation d'au moins une surface d'onde, chaque surface d'onde étant associée à un point source issu d'un plan focal d'un système optique, disposé ou destiné à être disposé au voisinage du plan focal du système optique, selon la revendication 9.

D'autres aspects du dispositif sont les suivants.

Les moyens d'acquisition comportent au moins un détecteur qui est également utilisé comme détecteur pour le système optique.

Au moins une lame fixe ou escamotable est disposée devant le détecteur, ladite lame générant la déformation supplémentaire.

Il comprend en outre des moyens de calibration de la déformation supplémentaire.

Il comprend en outre des moyens pour communiquer la ou les déformation(s) recherchée(s) à un dispositif de correction du système optique.

Le système optique est un instrument d'observation optique choisi dans le groupe suivrant : télescope, lunette, système catadioptrique, seul(e) ou en réseau.

Le système optique est un instrument d'émission d'un ou plusieurs faisceau(x) laser.

Un détecteur du dispositif est une capteur CCD ou CMOS.

Le procédé et le dispositif de l'invention présentent l'avantage de pouvoir mesurer les déformations d'une surface d'onde de manière non ambiguë et ne nécessitent qu'une seule image et donc un dispositif extrêmement simple. Il n'y a donc pas d'éléments optiques auxiliaires ni de problèmes de simultanéité des images.

Ainsi, cela permet d'obtenir un dispositif peu complexe pouvant être mis en œuvre lorsque les spécifications relatives à des applications temps réel sont fortes. De plus, il n'est pas nécessaire d'utiliser des moyens d'acquisition additionnels comme cela est le cas dans la technique de la diversité de phase par exemple.

## PRESENTATION DES FIGURES

D'autres caractéristiques et avantages de l'invention ressortiront encore de la description qui suit laquelle est purement illustrative et non limitative et doit être lue en regard des dessins annexés sur lesquels :

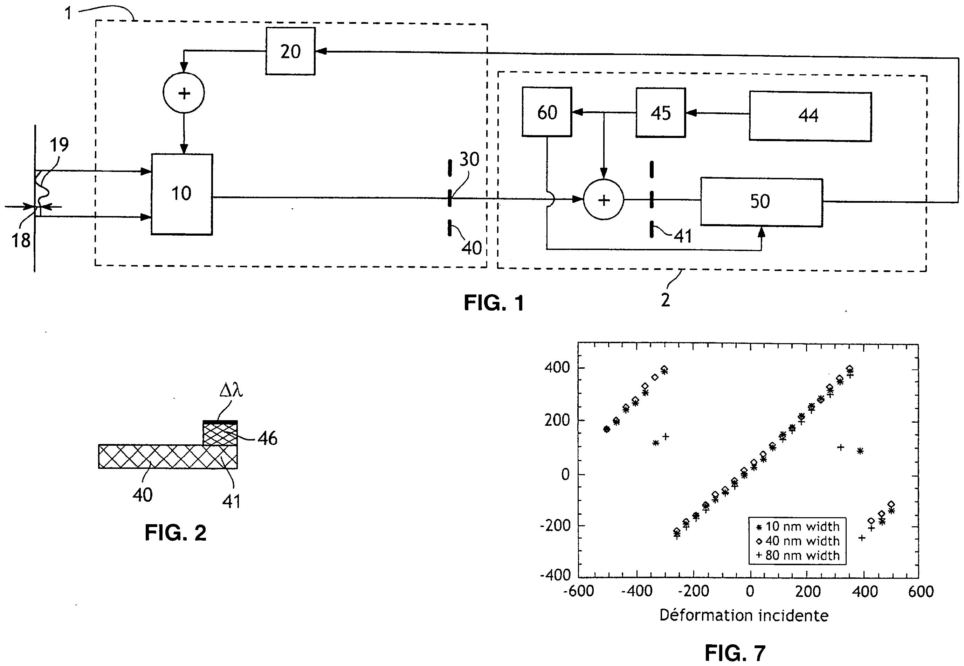

- la figure 1 illustre une implémentation possible du dispositif de l'invention ;
- la figure 2 illustre un mode de réalisation pour la mise en œuvre du générateur de déformation du dispositif de l'invention ;

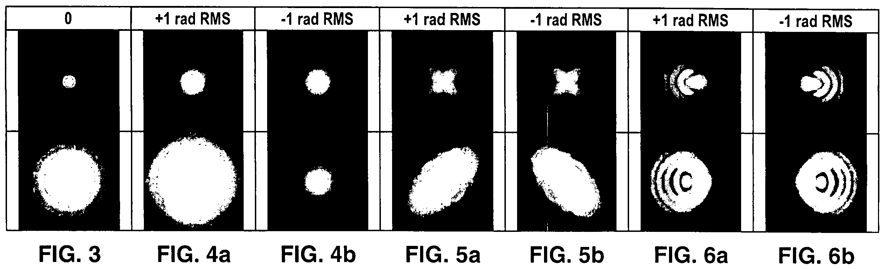

- la figure 3 illustre l'image d'un point source sans déformation incidente, la figure du dessus est l'image prise au plan focal de l'instrument d'observation, la figure du dessous est l'image prise après ajout de la déformation supplémentaire du type défocalisation de 2 rad RMS,
- les figures 4a et 4b illustrent respectivement l'image d'un point source dans le cas où la déformation incidente est une défocalisation de +1 rad RMS et -1 rad RMS, la figure au dessus est l'image prise au plan focal de l'instrument d'observation, la figure du dessous est l'image prise après ajout de la déformation supplémentaire,
- les figures 5a et 5b illustrent respectivement l'image d'un point source dans le cas où la déformation incidente est un astigmatisme de +1 rad RMS et -1 rad RMS, la figure du dessus est l'image prise au plan focal de l'instrument d'observation, la figure du dessous est l'image est prise après ajout de la déformation supplémentaire,
- les figures 6a et 6b illustrent respectivement l'image d'un point source dans le cas où la déformation incidente est une coma de +1 RMS rad et -1 rad RMS, la figure du dessus est l'image prise au plan focal de l'instrument d'observation, la figure du dessous est l'image prise après ajout de la déformation supplémentaire,
- la figure 7 illustre les déformations estimées en fonction des déformations incidentes appliquées ;

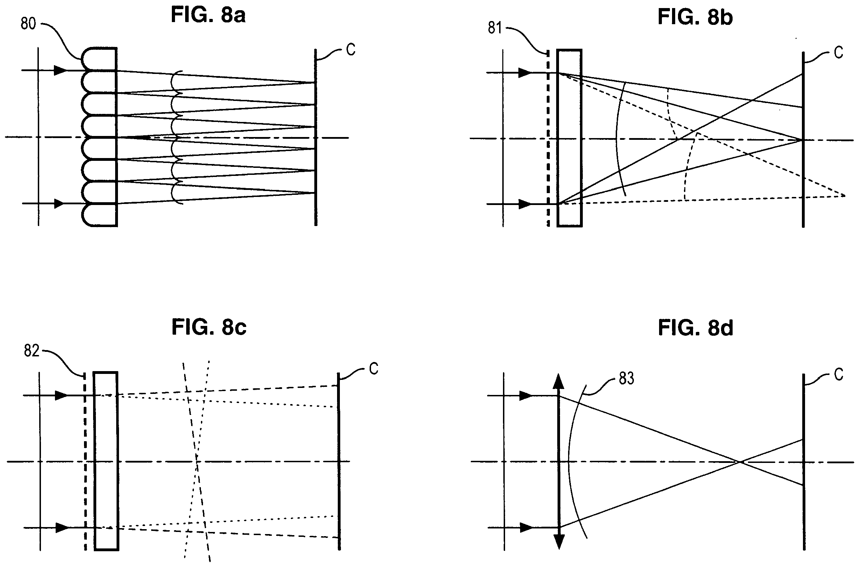

- les figures 8a, 8b, 8c et 8d illustrent la déformation introduite selon respectivement un analyseur de surface d'onde de type Shack-Hartmann, un analyseur de surface d'onde du type diversité de phase ; un analyseur de surface d'onde utilisant l'interférométrie à décalage et un analyseur de surface d'onde conforme à l'invention

## DESCRIPTION D'UN OU PLUSIEURS MODES DE REALISATION ET DE MISE EN ŒUVRE

La figure 1 illustre une implémentation possible d'un dispositif de mesure 2 d'au moins une déformation d'au moins une surface d'onde 19. Ce dispositif appartient à la famille des ASOs, présentée précédemment.

Ce dispositif 2 fonctionnant au voisinage d'un plan focal 30, cela facilite son implémentation en aval d'un système optique 1 en amont.

Un tel dispositif 2 peut par exemple être installé au voisinage d'un détecteur 40 du système optique 1, voire être fusionné avec ce détecteur.

Un autre intérêt d'un fonctionnement au voisinage d'un plan focal 30 est qu'il peut être alimenté par plusieurs faisceaux dans le cadre d'un réseau phasé de sous-pupilles.

Le dispositif de mesure 2 peut aussi être en aval d'un système optique 1 tel que par exemple un instrument d'observation ou d'émission de faisceaux laser pour la remise en forme de faisceaux.

En particulier, l'instrument d'observation optique est par exemple, un télescope, une lunette, un système catadioptrique, seul ou en réseau. Il peut être monolithique (à pupille continue) ou constitué d'un réseau phasé de sous-pupilles (miroir segmenté, télescope multi-pupilles, interféromètre stellaire ou réseau de lasers).

Le dispositif de mesure 2 met en œuvre un procédé de mesure d'au moins une déformation 18 d'au moins une surface d'onde 19, chaque surface d'onde étant associée à un point source issu du plan focal 30 du système optique 1.

Physiquement, telles que connues en soi, les déformations 18 d'une surface d'onde 19 sont introduites par un système optique et/ou par le milieu de propagation de la lumière et/ou par une pièce à caractériser, c'est-à-dire, dont on cherche à mesurer la forme, ou que l'on cherche à contrôler.

Dans la suite de la description, nous emploierons le terme « déformations incidentes 18 » pour se référer à ces déformations.

Au niveau du système optique 1, au moins un faisceau issu d'un objet incluant au moins un point source (naturel ou artificiel) observé via une pupille 10 ou un ensemble de pupilles (par exemple, dans le cas d'un réseau de télescopes ou de fibres optiques) sont focalisés au plan focal 30 du système optique 1.

C'est au moyen d'une matrice de détecteurs 40 placée au voisinage du plan focal 30 que l'on acquiert éventuellement l'image incidente issue de l'objet observé.

La matrice de détecteurs est, par exemple, composée de capteurs CCD ou CMOS.

Il est à noter que la source du dispositif de mesure 2, c'est-à-dire l'image incidente comprenant l'image d'un point source issue du système optique 1, est nécessairement ponctuelle (point source naturel ou observé) mais celle du capteur d'imagerie 40 ne l'est pas forcément.

En effet, le dispositif de mesure des déformations 2 peut par exemple être pointé sur une étoile non résolue (point source) en périphérie d'un objet astronomique complexe observé par le système 1.

Le dispositif de mesure 2 repose sur l'utilisation de l'image d'un ou plusieurs point(s) source.

Il peut aussi être utilisé lors de l'observation d'objets étendus, en insérant une source ponctuelle dans le champ observé.

Il est possible d'introduire cette source ponctuelle de plusieurs manières :

- soit l'objet observé contient une source ponctuelle dans le champ (étoile au voisinage d'un objet astronomique par exemple) ;
- soit une source ponctuelle est créée artificiellement au voisinage de l'objet, il peut s'agir d'une source coopérative au voisinage de l'objet observé pour un système industriel ;
- soit la source ponctuelle est projetée à distance sur l'objet, comme dans le cas de la désignation laser d'une cible, incluant l'étoile laser utilisée en astronomie ;
- soit la source est insérée au sein de l'instrument d'observation optique 1, par tous les moyens connus de l'homme du métier, par séparation spatiale dans la pupille et en particulier dans l'occultation centrale de l'instrument, dans une portion excentrée du champ, par une lame séparatrice ou dichroïque, sur une autre polarisation, etc., dans ce cas, on ne peut mesurer les déformations que sur le trajet en aval de la source ;
- soit dans le cas de mise en forme de faisceaux, le faisceau lui-même sert de source.

La mesure des déformations incidentes 18 est obtenue en générant une déformation supplémentaire 45 pré-déterminée, au moyen par exemple d'un générateur de déformations 44.

On note que la déformation supplémentaire 45 prédéterminée doit être unique et continûment dérivable.

Cette déformation :

- ne doit présenter aucune discontinuité (hors celle du diaphragme d'ouverture de l'instrument), ce qui exclut tout masque en transmission et donc certains réseaux ;
- ne doit présenter aucun saut de phase, comme ceux produits par un masque de phase ou certains réseaux ;

- ne doit présenter aucun point anguleux, comme ceux produits par des micro-lentilles ;
- ne doit pas être constituée d'une superposition de plusieurs états, comme ceux produits par certains réseaux. cette déformation peut résulter d'une aberration propre de l'instrument (et en particulier d'une défocalisation du détecteur ne nécessitant aucun composant optique supplémentaire) ou d'une aberration intrinsèque (par exemple un résidu d'aberration sphérique) ou être introduite volontairement (lame oblique en faisceau convergent).

Dans tous ces cas, l'éventuel composant additionnel est réalisé par polissage et non par des techniques de type dépôt sous vide.

On a illustré sur les figures 8a, 8b, 8c et 8d la déformation introduite selon respectivement un analyseur de surface d'onde de type Shack-Hartmann, un analyseur de surface d'onde du type diversité de phase ; un analyseur de surface d'onde utilisant l'interférométrie à décalage et un analyseur de surface d'onde conforme à l'invention.

Dans le cas d'un analyseur de type Shack-Hartmann (figure 8a) des micro-lentilles 80 provoquent une série de défocalisations (déformations) locales. Dans le cas d'un analyseur de type diversité de phase (figure 8b) un réseau 81 peut diffracter sur un même capteur C les images nécessaires à la diversité de phase. Dans le cas d'un analyseur utilisant l'interférométrie à décalage (figure 8c) un réseau 82 peut produire les fronts d'onde nécessaires à l'interférométrie à décalage latéral.

Enfin dans le cas d'un analyseur du type décrit (figure 8d), une simple déformation 83 est nécessaire.

La déformation générée est alors ajoutée au(x) surface(s) d'onde associée(s) au(x) point(s) source issu(s) du plan focal 30 du système optique 1.

Après avoir ajoutée la déformation supplémentaire 45 prédéterminée, on obtient une image du ou des point(s) source associé(s) au(x) surface(s) d'onde.

Cette image contient une ou plusieurs déformation(s) incidente(s) 18 (que l'on souhaite mesurer afin si besoin de les compenser) plus la déformation supplémentaire 45 pré-déterminée.

L'image comprenant la déformation supplémentaire 45 prédéterminée est acquise par une matrice de détecteurs 41 similaire à la matrice de détecteurs 40 pour être traitée par la suite par un calculateur 50.

L'acquisition des images au niveau des matrices de détecteurs 40 et 41 s'effectue par un échantillonnage de préférence à Shannon. C'est le ratio entre l'espacement entre les détecteurs et la largeur de la fonction de transfert qui conditionne l'échantillonnage.

L'image contenant la déformation supplémentaire 45 pré-déterminée est alors traitée numériquement par un calculateur 50 afin de mesurer la ou les déformation(s) recherchée(s).

La mesure met en œuvre un modèle d'images générées par le calculateur 50. Un tel modèle est fonction des déformations recherchées et de l'ensemble des paramètres physiques pertinents : la déformation supplémentaire pré-déterminée 45, l'objet observé ainsi que les caractéristiques du système optique 1, du détecteur 41 et les paramètres physiques du milieu de propagation de la lumière, la forme de la pupille d'entrée 10 et la bande spectrale, en particulier.

Le procédé repose sur le fait que l'on recherche les déformations 18 qui produisent un modèle d'image le plus proche de l'image acquise.

Le principe de mesure des déformations consiste à rechercher les déformations qui minimisent un critère de distance entre le modèle d'image formé par le calculateur et l'image effectivement acquise. Il peut s'agir d'une méthode d'estimation itérative.

De manière générale pour apprécier la proximité entre le modèle d'image généré et l'image acquise, on calcule un critère de distance entre le modèle d'image généré et l'image acquise.

La distance à minimiser est, par exemple, la norme euclidienne de la différence entre le modèle de l'image et l'image acquise.

Afin de converger directement vers la « bonne » solution, il est à noter que la déformation recherchée peut être initialisée avec la déformation supplémentaire 45 pré-déterminée. D'autres algorithmes d'estimation connus de l'homme du métier peuvent toutefois être envisagés, notamment pour une utilisation temps-réel. L'algorithme itératif est alors remplacé par un algorithme temps réel.

En effet, avantageusement, la mesure peut s'effectuer à l'aide d'un algorithme temps-réel remplaçant l'algorithme itératif.

Mathématiquement, on peut décrire la méthode de mesure de la manière suivante

$$d(\mathbf{a}) = \left\| M_i(\mathbf{a}, \boldsymbol{\theta}) - i \right\|,$$

où **a** est un vecteur dont les éléments sont les déformations recherchées, $\theta$ est un vecteur dont les éléments sont les autres paramètres physiques pertinents, i est l'image enregistrée et $M_i(\mathbf{a}, \theta)$ est le modèle de l'image formée par le calculateur 50.

Le vecteur **a** peut par exemple contenir les coefficients du développement des déformations de la surface d'onde sur la base des polynômes de Zernike.

Chaque coefficient traduit la force d'une déformation de la surface d'onde élémentaire comme par exemple, un basculement, une défocalisation, un astigmatisme, une coma, une coma triple, une aberration sphérique.

Dans le cas de mesure le plus simple, l'ensemble des paramètres $\theta$ est connu. Dans le cas contraire ils peuvent être ajoutés à l'ensemble des paramètres à rechercher.

Il est à noter qu'en utilisant un générateur de déformations 44, puisque la déformation supplémentaire 45 est connue et supérieure à la déformation incidente 18, il n'y a pas d'ambiguïtés sur les déformations recherchées.

Afin de lever l'ambiguïté sur le signe de la déformation recherchée, la déformation supplémentaire 45 comprend une composante centro-symétrique (c'est-à-dire dont le support est à symétrie centrale et telle que deux points symétriques ont la même valeur) dont au moins un des coefficients a une amplitude supérieure à celle qui peut être présente dans la déformation recherchée 18. La déformation incidente (recherchée) 18 quant à elle, peut être quelconque.

Il est à noter qu'une solution simple pour implémenter le générateur de déformations 44 est par exemple de défocaliser le capteur 41. La déformation supplémentaire 45 pré-déterminée, est alors une simple défocalisation.

Le générateur de déformations 44 peut également avantageusement être couplé à un dispositif d'étalonnage 60 permettant le calibrage de la déformation supplémentaire 45, autorisant une plus grande liberté quant au choix de la déformation 45 que l'on souhaite ajouter.

Il peut s'agir par exemple, d'un système de métrologie laser, d'une modulation temporelle ou d'une caractéristique opto-mécanique bien connue (épaisseur d'une lame de verre par exemple).

Le dispositif d'étalonnage 60 permet en outre de prendre en compte d'éventuelles dérives au cours du temps de la déformation supplémentaire 45 générée.

Il convient en effet de noter que la connaissance précise de la déformation 45 est nécessaire pour déduire la déformation 18 de la déformation totale mesurée.

Une fois la calibration effectuée, le système peut fournir des mesures très précises, jusqu'à mieux que $\lambda/100$ si le rapport signal à bruit le permet.

L'amplitude des déformations estimées peut varier de plusieurs longueurs d'ondes $\lambda$ (voire quelques dizaines de $\lambda$) à des déformations de faible amplitude, typiquement inférieures à $\lambda/10$. Le choix des déformations supplémentaires 45 permettant d'ajuster la dynamique du système.

Le générateur de déformations 44 peut être réalisé par une lame de verre positionnée au voisinage du plan focal 30 du système optique 1.

Cette lame de verre a pour effet d'ajouter une déformation supplémentaire pré-déterminée puisque par la géométrie de la lame de verre on contrôle parfaitement la déformation supplémentaire ajoutée.

La figure 2 illustre la matrice de détecteurs 40 sur laquelle est accolée une lame de verre 46. Ici la lame de verre réalise le générateur de déformations 44.

La lame de verre 46 ainsi ajoutée permet de défocaliser une partie du détecteur principal d'imagerie 40. Ceci permet de fusionner les deux capteurs 40 et 41 dans le même composant physique.

La lame 46 est fixe ou escamotable.

Cette fusion est en particulier obtenue en utilisant un point source en périphérie du champ d'intérêt.

De manière avantageuse, la lame de verre inclut un filtre spectral de largeur $\Delta\lambda$ permettant la sélection de la bande d'intérêt du dispositif d'estimation.

En outre, les techniques de mesure de phase à partir de données mesurées dans le plan focal fonctionnent souvent avec une bande spectrale assez étroite. Dans le cadre d'une application à un réseau phasé de sous-pupilles, il peut alors être difficile de lever les ambiguïtés de $2\pi$ sur les pistons mesurés. La solution présentée en figure 2 peut être étendue pour lever cette ambiguïté de $2\pi$, en utilisant plusieurs petites lames 46 en périphérie du détecteur 40 et en variant le domaine spectral associé à chaque lame.

Il est à noter que le générateur de déformations 45 peut également inclure un masque pupillaire et ne transmettre que certaines parties de la pupille. Pour un réseau dense de sous-pupilles phasées, ceci peut permettre d'améliorer les performances de l'analyse de l'image 41. Dans ce cas, plusieurs dispositifs de mesure 2 (avec des masques pupillaires différents) sont requis pour couvrir la totalité de la pupille de 1.

Dans le cas d'un système à plusieurs sous-pupilles co-alignées, la déformation supplémentaire 45 peut-être introduite par une défocalisation globale de l'ensemble des sous-pupilles. Cette défocalisation a pour effet de défocaliser mais aussi de séparer les images de chaque sous-pupille, permettant un traitement indépendant de chaque sous-pupille. La position des images élémentaires permet également de déterminer la défocalisation globale introduite et ainsi de calibrer la défocalisation sur chaque sous-pupille.

Les figures 3 à 6 représentent l'image d'un point source dans différentes conditions de déformations introduites par le système optique 1 et/ou le milieu de propagation de la lumière et de prise d'image qui est dans ce cas un instrument d'observation optique.

Ces illustrations montrent que le dispositif et le procédé de mesure permettent de lever l'ambiguïté de signe sur la déformation incidente.

Les images du dessus représentent l'image acquise au plan focal 30 et les images du dessous représentent l'image acquise au niveau du détecteur 41 après ajout d'une déformation supplémentaire 45 de type défocalisation d'amplitude égale à 2 rad RMS.

La figure 3 illustre le cas où il n'y a pas de déformation incidente.

Sur les figures 4a et 4b sont respectivement illustrés les cas où la déformation incidente 18 est une défocalisation de +1 rad RMS et -1 rad RMS.

Sur les figures 5a et 5b sont respectivement illustrés les cas où la déformation incidente 18 est un astigmatisme de +1 rad RMS et -1 rad RMS.

Sur les figures 6a et 6b sont respectivement illustrés les cas où la déformation incidente 18 est une coma de +1 rad RMS et -1 rad RMS.

Dans le cas où la déformation incidente 18 est une coma (cf. figure 6) c'est-à-dire une déformation anti-symétrique la seule image prise au plan focal 30 permet de lever l'ambiguïté sur le signe.

En effet selon que la coma est d'amplitude égale +1 rad RMS ou -1 rad RMS l'image au plan focal est différente, on peut déterminer le signe avec cette image seulement.

Dans le cas d'une défocalisation (cf. figure 4a et 4b) ou d'un astigmatisme (cf. figures 5a et 5b) l'image au plan focal 30 de l'instrument d'observation optique 1 est identique quelque soit le signe de la déformation incidente 18.

Sur les figures 4a, 4b, 5a et 5b on montre bien que l'on peut lever l'ambiguïté sur le signe de la déformation. En effet, puisque l'image acquise après avoir ajoutée la déformation supplémentaire 45 est différente selon que la déformation 18 est de signe positif ou négatif.

Il est à noter que la déformation supplémentaire 45 est centro-symétrique.

La figure 7 illustre des résultats expérimentaux d'une mesure d'une déformation du type « piston différentiel » sur une pupille à plusieurs sous-pupille. Le piston est un retard de phase, pour chaque piston appliqué le piston estimé a été tracé.

En abscisse est représentée la déformation incidente 18 appliquée sur une des pupilles dans le cas d'un dispositif d'observation à trois pupilles.

En ordonnée sont représentées les déformations mesurées avec le dispositif de mesure pour plusieurs largeurs spectrales pour l'acquisition.

La mesure des déformations s'opère correctement, on obtient ainsi un réseau de droites.

Il est à noter que des résultats similaires ont été obtenus pour d'autres types de déformations incidentes 18 connues de l'homme du métier, comme par exemple un basculement, une défocalisation, un astigmatisme, une coma, une coma triple, une aberration sphérique.

Ainsi le dispositif permet la mesure de plusieurs types de déformations incidentes 18.

Par ailleurs, un fonctionnement en boucle ouverte peut aussi être envisagé, pour la caractérisation d'une déformation dynamique par exemple, ou pour une correction numérique a posteriori.

Cependant comme connu, le dispositif est généralement amené à fonctionner en boucle fermée. C'est-à-dire qu'après mesure des déformations, on applique une correction sur des moyens dédiés du système optique 1 en fonction des déformations mesurées pour les corriger.

A cet effet, on peut utiliser un dispositif d'optique réflectif ou transmittif par exemple un miroir déformable 20 ou pour un système multi-pupille par des dispositifs agissant sur le retard optique de chaque sous-pupille.

Le miroir déformable 20, outre son utilisation en boucle fermée lorsqu'il est utilisé comme moyen de correction pour corriger la déformation incidente 18, peut servir à compléter le générateur de déformations 44 dans plusieurs cas.

Pour l'accrochage, lorsque la déformation incidente 18 est beaucoup plus importante que la déformation supplémentaire 45, alors une modulation temporelle permet d'utiliser une technique de type diversité de phase afin de réduire progressivement l'amplitude du résidu.

Pour l'étalonnage de la déformation supplémentaire 45, si le miroir déformable 20 est bien étalonné, par exemple s'il est équipé d'un système de métrologie local comme une métrologie laser ou un capteur capacitif ou une jauge de contrainte, alors une modulation temporelle de phase appliquée par le miroir déformable 20 permet d'estimer la déformation supplémentaire 45. Le miroir déformable 20 et surtout sa calibration jouent alors le rôle du dispositif de calibration 60 tel que déjà mentionné.

Il est à noter que dans le cas où la source ponctuelle est ajoutée artificiellement à l'objet observé, il peut être avantageux de la défocaliser volontairement afin de produire la déformation nécessaire. Dans ce cas, le détecteur 41 peut être inclus dans le détecteur 40, ce qui simplifie considérablement le système.

Par ailleurs, il est également possible d'autoriser l'analyse simultanée de plusieurs points sources provenant de plusieurs directions, tant que leur image se forme dans des zones non recouvrantes sur le capteur 41.

Pour un système anisoplanétique, cette propriété permet de réaliser simplement une analyse de la surface d'onde dans plusieurs directions de champ, ouvrant la voie à de nombreuses applications (déconvolution variant dans le champ, optique adaptative multi-conjuguée).

En outre le procédé de mesure peut être utilisé non seulement pour mesurer les déformations de la voie d'imagerie d'un système optique, mais aussi pour améliorer la mesure des déformations dans un analyseur de surface d'onde.

Par exemple, un analyseur de type Hartmann-Shack, connu de l'homme du métier, calcule le front d'onde à partir de la mesure de la position de l'image d'un point source dans le plan focal associé à une sous-pupille.

Cette mesure fournit deux coordonnées, correspondant au basculement local du front d'onde sur chaque sous-pupille.

Cette technique d'analyse de surface d'onde peut être affinée en mesurant davantage de modes sur chaque sous-pupille.

En ajoutant une déformation supplémentaire pré-déterminée dans chaque sous-pupille (défocalisation du détecteur, aberration sphérique dans les micro-lentilles), il est possible de mesurer non seulement la pente mais également des modes d'ordre supérieurs sur les mêmes sous-pupilles.

Par ailleurs, la possibilité de mesurer une déformation d'une surface d'onde à partir d'une seule image permet de concevoir des systèmes très simples en fusionnant le détecteur d'imagerie 40 et le dispositif de mesure 2.

Pour ce faire, il suffit de défocaliser légèrement le détecteur d'imagerie 40, d'une quantité connue (ou d'introduire une autre déformation, par exemple un résidu d'aberration sphérique lors de la conception). Cette déformation est compensée par traitement.

Dans le cas où l'objet observé comporte des points sources, intrinsèques ou artificiels, alors leur image permet la mesure des déformations.

Il est alors possible d'inclure ces défauts additionnels, autrement inconnus, dans la correction numérique.

Cette technique revient à placer le détecteur d'imagerie 40 derrière le générateur de déformations 44, afin de fusionner les deux détecteurs 40 et 41.

L'utilisation d'une source interne déformée, par exemple défocalisée, est particulièrement avantageuse dans le cas où un autre analyseur de surface d'onde est utilisé (par exemple fonctionnant sur la source étendue observée). Une source interne ponctuelle, légèrement déformée, peut alors être installée en amont du dispositif de mesure et du plan focal.

Le dispositif et le procédé décrits présentent alors l'intérêt de permettre, lors d'une phase d'étalonnage, la mesure précise des déformations vues par la voie d'imagerie.

La mesure simultanée des déformations par l'autre analyseur de surface d'onde est directe. La soustraction de ces deux déformations permet de déterminer la déformation différentielle, nécessaire à la bonne correction du détecteur d'imagerie.

Enfin, il est à noter que de nombreux systèmes incluent une roue à filtres en amont du détecteur 40 pour sélectionner la bande spectrale d'observation. Il suffit d'ajouter à ces filtres une lame produisant la déformation voulue (lame à faces planes suffisamment épaisse dans le cas d'un faisceau convergent ou plus généralement lame de forme quelconque comme une lame de Schmidt) et incluant si besoin un filtre spectral.

Ce dispositif permet de transformer le détecteur d'imagerie 40 en un détecteur de type 41 permettant l'analyse de surface d'onde via un calculateur 50. Un tel mode permet de calibrer les déformations vues par le capteur d'imagerie lors de l'observation d'un point source, par exemple lors d'une phase de test ou avant/après une observation.

De manière additionnelle, le dispositif et le procédé décrits s'appliquent au cas où on acquiert plusieurs images du même point source au moyen par exemple de micro-lentilles, jeux de filtres spectraux, jeux de masques pupillaires.

**Revendications**

**1.** Procédé de mesure d'au moins une déformation (18) d'au moins une surface d'onde (19), chaque surface d'onde étant associée à un point source issu d'un plan focal d'un système optique (1), procédé dans lequel au voisinage du plan focal image (30) du système optique

- on génère une déformation supplémentaire (45) prédéterminée, unique, continument dérivable et comprenant une composante centro-symétrique de manière à estimer la déformation sans ambigüité de signe, la déformation supplémentaire étant soit générée :

  ◦ au moyen d'une lame de verre fixe ou escamotable disposée en amont d'un détecteur dudit système optique (1) ; soit
  ◦ par défocalisation du système optique (1) ; soit
  ◦ par le système optique incluant une déformation connue introduite à la conception du système optique (1) ; soit
  ◦ par un miroir déformable ;

- on ajoute la déformation générée au(x) surface(s) d'onde associée(s) au(x) point(s) source issu(s) du plan focal (30) ;
- on acquiert une seule image du ou des point(s) source associé(s) au(x) surface(s) d'onde ainsi formée(s), l'image acquise comprenant la déformation supplémentaire, unique, continument dérivable et comprenant une composante centro-symétrique ;
- on traite la seule image ainsi acquise pour, à partir de la seule image acquise et de la connaissance de la déformation supplémentaire (45) générée, mesurer la ou les déformation(s) recherchée(s) (18).

**2.** Procédé selon la revendication 1, **caractérisé en ce que** la mesure des déformations (18) met en oeuvre un modèle d'images générées par un calculateur (50), et **en ce qu'**on recherche au moins une déformation qui produit avec ce modèle une image proche de l'image acquise.

**3.** Procédé selon la revendication 2, **caractérisé en ce que** pour apprécier la proximité avec l'image acquise, on calcule une distance entre une image générée et l'image acquise.

**4.** Procédé selon la revendication 3, **caractérisé en ce que** le calcul de la distance met en œuvre un calcul de distance euclidienne.

**5.** Procédé selon l'une des revendications 2 à 4, **caractérisé en ce que** le modèle d'images est au moins fonction des caractéristiques du système optique (1), du milieu de propagation de la lumière et de la déformation supplémentaire (45) pré-déterminée.

**6.** Procédé selon la revendication 5, **caractérisé en ce que** les caractéristiques du système optique (1) sont la forme de la pupille (10) dudit système et la bande spectrale.

**7.** Procédé selon l'une des revendications 1 à 6 , **caractérisé en ce que** la déformation supplémentaire (45) est choisie dans le groupe suivant : une défocalisation, un astigmatisme, une aberration sphérique.

**8.** Procédé selon l'une des revendications précédentes, **caractérisé en ce qu'**on introduit la ou les déformations de la surface d'onde par le milieu de propagation de la lumière, par le système optique (1), ou par une pièce à caractériser.

**9.** Dispositif de mesure d'au moins une déformation (18) d'au moins une surface d'onde (19), chaque surface d'onde étant associée à un point source issu d'un plan focal d'un système optique (1), disposé ou destiné à être disposé au voisinage du plan focal image (30) du système optique (1), le dispositif comprenant

   - des moyens (44) pour générer une déformation supplémentaire (45) pré-déterminée, unique, continûment dérivable et comprenant une composante centro-symétrique, lesdits moyens (44) étant constitués par

      ○ une lame de verre fixe ou escamotable disposée au voisinage du plan focal (30) dudit système optique (1) ; soit
      ○ le système optique lui-même incluant une déformation connue introduite à la conception du système optique ou par défocalisation de ce dernier ; soit
      ○ par un miroir déformable ;

   - des moyens pour ajouter la déformation générée au(x) surface(s) d'onde associée(s) au(x) point(s) source issu(s) du plan focal (30) ;
   - des moyens (41) pour acquérir une seule image du ou des point(s) source associé(s) au(x) surface(s) d'onde ainsi formée(s), la seule image acquise comprenant la déformation supplémentaire, unique, continûment dérivable et comprenant une composante centro-symétrique ;
   - des moyens (50) de traitement de la seule image acquise pour, à partir de la seule image acquise et de la connaissance de la déformation supplémentaire (45) mesurer la ou les déformation(s) recherchée(s) (18).

**10.** Dispositif selon la revendication 9, **caractérisé en ce que** les moyens d'acquisition comportent au moins un détecteur (40) qui est également utilisé comme détecteur (41) pour le système optique (1).

**11.** Dispositif selon la revendication 10, **caractérisé en ce que** au moins une lame (46) fixe ou escamotable est disposée devant le détecteur (40), ladite lame générant la déformation supplémentaire.

**12.** Dispositif selon l'une des revendications 9 à 11, **caractérisé en ce qu'**il comprend en outre des moyens de calibration (60) de la déformation supplémentaire (45).

**13.** Dispositif selon l'une des revendications 9 à 12, **caractérisé en ce qu'**il comprend en outre des moyens pour communiquer la ou les déformation(s) recherchée(s) à un dispositif de correction (20) du système optique (1).

**14.** Dispositif selon l'une des revendications 9 à 13, **caractérisé en ce que** le système optique (1) est un instrument d'observation optique choisi dans le groupe suivant : télescope, lunette, système catadioptrique, seul(e) ou en réseau.

**15.** Dispositif selon l'une des revendications 9 à 13, **caractérisé en ce que** le système optique (1) est un instrument d'émission d'un ou plusieurs faisceau(x) laser.

**16.** Dispositif selon l'une des revendications 10 à 11, **caractérisé en ce qu'**un détecteur est un capteur CCD ou CMOS.

**Patentansprüche**

**1.** Verfahren zum Messen mindestens einer Verformung (18) mindestens einer Wellenoberfläche (19), wobei jede Wellenoberfläche einem aus einer Fokalebene eines optischen Systems (1) hervorgegangen Quellenpunkt zugeordnet ist, wobei bei dem Verfahren in der Nähe der Bildfokalebene (30) des optischen Systems

   - eine vorher festgelegte, einzige, stetig differenzierbare zusätzliche Verformung (45) generiert wird, die eine zentralsymmetrische Komponente umfasst, um die Verformung ohne Vorzeichenambiguität zu bestimmen, wobei die zusätzliche Verformung erzeugt wird entweder:

      ○ mittels eines festen oder klappbaren Glasplättchens, das vor einem Detektor des optischen Systems (1) angeordnet ist, oder
      ○ durch Defokussierung des optischen Systems (1), oder
      ○ durch das optische System, das eine bekannte Verformung enthält, die in die Konzeption des optischen Systems (1) eingeflossen ist, oder

◦ durch einen verformbaren Spiegel

- die an der/n Wellenoberfläche/n generierte, dem/n aus der Fokalebene (30) hervorgegangen Quellenpunkt/en zugeordnete/n Verformung hinzugefügt wird;
- ein einziges Bild des oder der Quellenpunkte, die der/n derart gebildeten Wellenoberfläche/n zugeordnet ist/sind, erfasst wird, wobei das erfasst Bild die stetig differenzierbare einzige zusätzliche Verformung umfasst und eine zentralsymmetrische Komponente umfasst;
- das derart erfasste einzige Bild verarbeitet wird, um auf der Basis des einzigen erfassten Bildes und der Kenntnis der generierten zusätzlichen Verformung (45) die gesuchte/n Verformung/en (18) zu messen.

2. Verfahren nach Anspruch 1, **dadurch gekennzeichnet, dass** das Messen der Verformungen (18) ein Modell mit Bildern verwendet, die von einem Rechner (50) generiert wurden, und dass mindestens eine Verformung gesucht wird, die mit diesem Modell ein Bild produziert, das dem erfassten Bild nahe ist.

3. Verfahren nach Anspruch 2, **dadurch gekennzeichnet, dass** für die Beurteilung der Nähe zu dem erfassten Bild ein Abstand zwischen einem generierten Bild und dem erfassten Bild berechnet wird.

4. Verfahren nach Anspruch 3, **dadurch gekennzeichnet, dass** für die Berechnung des Abstands eine Euklidische Abstandsberechnung durchgeführt wird.

5. Verfahren nach einem der Ansprüche 2 bis 4, **dadurch gekennzeichnet, dass** das Bildmodell mindestens von den Eigenschaften des optischen Systems (1), des Ausbreitungsmilieus des Lichts und der vorher festgelegten zusätzlichen Verformung (45) abhängt.

6. Verfahren nach Anspruch 5, **dadurch gekennzeichnet, dass** die Eigenschaften des optischen Systems (1) die Form der Pupille (10) des Systems und das Spektralband sind.

7. Verfahren nach einem der Ansprüche 1 bis 6, **dadurch gekennzeichnet, dass** die zusätzliche Verformung (45) aus der folgenden Gruppe ausgewählt ist: eine Defokussierung, ein Astigmatismus, eine sphärische Aberration.

8. Verfahren nach einem der vorangehenden Ansprüche, **dadurch gekennzeichnet, dass** die Verformung/en der Wellenoberfläche durch das Ausbreitungsmilieu des Lichts, durch das optische System (1) oder durch ein zu charakterisierendes Teil eingeführt wird/werden.

9. Vorrichtung zum Messen mindestens einer Verformung (18) mindestens einer Wellenoberfläche (19), wobei jede Wellenoberfläche einem aus einer Fokalebene eines optischen Systems (1) hervorgegangen Quellenpunkt zugeordnet ist, angeordnet oder bestimmt, in der Nähe der Bildfokalebene (30) des optischen Systems (1) angeordnet zu sein, wobei die Vorrichtung umfasst

- Mittel (44), um eine vorher festgelegte, einzige, stetig differenzierbare zusätzliche Verformung (45) zu generieren, die eine zentralsymmetrische Komponente umfasst, wobei die Mittel (44) bestehen aus

o einem festen oder klappbaren Glasplättchen, das in der Nähe der Fokalebene (30) des optischen Systems (1) angeordnet ist, oder

◦ das optische System selbst eine bekannte Deformation enthält, die in die Konzeption des optischen Systems eingeflossen ist, oder durch Defokussierung desselben, oder

◦ durch einen verformbaren Spiegel

- Mittel, um die an der/n Wellenoberfläche/n generierte, dem/n aus der Fokalebene (30) hervorgegangen Quellenpunkt/en zugeordnete/n Verformung hinzuzufügen;
- Mittel (41), um ein einziges Bild des oder der Quellenpunkte, die der/n derart gebildeten Wellenoberfläche/n zugeordnet ist/sind, zu erfassen, wobei das einzige erfasste Bild die stetig differenzierbare einzige zusätzliche Verformung umfasst und eine zentralsymmetrische Komponente umfasst;
- Mittel (50) zur Verarbeitung des einzigen erfassten Bildes, um auf der Basis des einzigen erfassten Bildes und der Kenntnis der zusätzlichen Verformung (45) die gesuchte/n Verformung/en (18) zu messen.

10. Vorrichtung nach Anspruch 9, **dadurch gekennzeichnet, dass** die Erfassungsmittel mindestens einen Detektor (40) aufweisen, der ebenfalls als Detektor (41) für das optische System (1) verwendet wird.

11. Vorrichtung nach Anspruch 10, **dadurch gekennzeichnet, dass** mindestens ein festes oder klappbares Plättchen (46) vor dem Detektor (40) angeordnet ist, wobei das Plättchen die zusätzliche Verformung generiert.

**12.** Vorrichtung nach einem der Ansprüche 9 bis 11, **dadurch gekennzeichnet, dass** sie ferner Kalibrierungsmittel (60) der zusätzlichen Verformung (45) umfasst.

**13.** Vorrichtung nach einem der Ansprüche 9 bis 12, **dadurch gekennzeichnet, dass** sie ferner Mittel umfasst, um die gesuchte/n Verformung/en an eine Korrekturvorrichtung (20) des optischen Systems (1) zu kommunizieren.

**14.** Vorrichtung nach einem der Ansprüche 9 bis 13, **dadurch gekennzeichnet, dass** das optische System (1) ein optisches Beobachtungsinstrument ist, das aus der folgenden Gruppe ausgewählt ist: Teleskop, Brille, katadioptrisches System, allein oder im Netzwerk.

**15.** Vorrichtung nach einem der Ansprüche 9 bis 13, **dadurch gekennzeichnet, dass** das optische System (1) ein Sendeinstrument von einem oder mehreren Laserstrahlen ist.

**16.** Vorrichtung nach einem der Ansprüche 10 bis 11, **dadurch gekennzeichnet, dass** ein Detektor ein CCD- oder CMOS-Sensor ist.

## Claims

**1.** A method for measuring at least one deformation (18) of at least one wave front (19), each wave front being associated with a point source derived from a focal plane of an optical system (1), method wherein, in the vicinity of the image focal plane (30) of the optical system:

- an additional deformation (45) which is predetermined, unique, continuously derivable and which comprises a centro-symmetric component is generated so as to estimate the unambiguous sign deformation, the additional deformation being generated either:

 ◦ by means of a fixed or retractable glass slide disposed upstream of a detector of said optical system (1) ; or
 ◦ by defocusing of the optical system (1); or
 ◦ by the optical system including a known deformation introduced upon design of the optical system (1); or
 ◦ by a deformable mirror;

- the generated deformation is added to the wave front(s) associated with the point source(s) derived from the focal plane (30);
- a single image of the point source(s) associated with the thus formed wave front (s) is acquired, the acquired image comprising the additional deformation that is unique, continuously derivable and that comprises a centro-symmetric component;
- the thus acquired single image is processed to measure, from the acquired single image and from the knowledge of the generated additional deformation (45), the sought deformation(s) (18).

**2.** The method according to claim 1, **characterized in that** the measurement of the deformations (18) implements a model of images generated by a calculator (50), and **in that** at least one deformation which produces, with this model, an image close to the acquired image, is sought.

**3.** The method according to claim 2, **characterized in that**, to appreciate the proximity with the acquired image, a distance between a generated image and the acquired image is calculated.

**4.** The method according to claim 3, **characterized in that** the calculation of the distance implements a Euclidean distance calculation.

**5.** The method according to any of claims 2 to 4, **characterized in that** the model of images is at least a function of the characteristics of the optical system (1), of the light propagation medium and of the predetermined additional deformation (45).

**6.** The method according to claim 5, **characterized in that** the characteristics of the optical system (1) are the shape of the pupil (10) of said system and the spectral band.

**7.** The method according to any of claims 1 to 6, **characterized in that** the additional deformation (45) is chosen from the following group: defocusing, astigmatism, spherical aberration.

**8.** The method according to any of the preceding claims, **characterized in that** the deformation(s) of the wave front is/are introduced by the light propagation medium, by the optical system (1), or by a part to be characterized.

**9.** A device for measuring at least one deformation (18) of at least one wave front (19), each wave front being associated with a point source derived from a focal plane of an optical system (1), disposed or intended to be disposed in the vicinity of the image focal plane (30) of the optical system (1), the device comprising:

- means (44) for generating an additional deformation (45) which is pre-determined, unique, continuously derivable and which comprises a centro-symmetric component, said means (44) being constituted by:

  ◦ a fixed or retractable glass slide disposed in the vicinity of the focal plane (30) of said optical system (1); or
  ◦ the optical system itself including a known deformation introduced upon design of the optical system or by defocusing of the latter; or
  ◦ by a deformable mirror;

- means for adding the generated deformation to the wave front(s) associated with the point source(s) derived from the focal plane (30);
- means (41) for acquiring a single image of the point source (s) associated with the thus formed wave front(s), the acquired single image comprising the additional deformation that is unique, continuously derivable and that comprises a centro-symmetric component;
- means (50) for processing the acquired single image to measure, from the acquired single image and from the knowledge of the additional deformation (45), the sought deformation(s) (18).

10. The device according to claim 9, **characterized in that** the acquisition means include at least one detector (40) which is also used as a detector (41) for the optical system (1).

11. The device according to claim 10, **characterized in that** at least one fixed or retractable slide (46) is disposed in front of the detector (40), said slide generating the additional deformation.

12. The device according to any of claims 9 to 11, **characterized in that** it further comprises means for calibrating (60) the additional deformation (45).

13. The device according to any of claims 9 to 12, **characterized in that** it further comprises means for communicating the sought deformation(s) to a device for correcting (20) the optical system (1).

14. The device according to any of claims 9 to 13, **characterized in that** the optical system (1) is an optical observation instrument chosen in the following group: telescope, telescopic sight, catadioptric system, individually or in network.

15. The device according to any of claims 9 to 13, **characterized in that** the optical system (1) is an instrument for emitting one or several laser beam(s).

16. The device according to any of claims 10 to 11, **characterized in that** a detector is a CCD or CMOS sensor.

**FIG. 1**

**FIG. 2**

Déformation incidente

* 10 nm width
◇ 40 nm width
+ 80 nm width

**FIG. 7**

EP 1 990 618 B1

| 0 | +1 rad RMS | -1 rad RMS | +1 rad RMS | -1 rad RMS | +1 rad RMS | -1 rad RMS |

FIG. 3  FIG. 4a  FIG. 4b  FIG. 5a  FIG. 5b  FIG. 6a  FIG. 6b

EP 1 990 618 B1

## FIG. 8a

## FIG. 8b

## FIG. 8c

## FIG. 8d

EP 1 990 618 B1

15

## RÉFÉRENCES CITÉES DANS LA DESCRIPTION

**Documents brevets cités dans la description**

- FR 2889774 A1

**Littérature non-brevet citée dans la description**

- **BLANCHARD et al.** *Applied Optics,* vol. 39 (35), 6649-6655
- **BAIK et al.** *Optics and Laser Technology,* 2007, vol. 39, 262-267
- *Fontanella: J. Optics (Paris),* 1985, vol. 16 (6), 257-268